# EUROPEAN PATENT APPLICATION

(11) **EP 4 845 193 A1**
(43) Date of publication of application: **25.11.2026**
(21) Application number: 25382518.6
(22) Date of filing: 22.05.2025
(51) Int. Cl.: H04W 12/30

(54) **CONFIGURING A USER DEVICE**

(71) Applicant: Giesecke+Devrient Mobile Security Germany GmbH, 81677 München (DE)
(72) Inventor: ALEJANDRE, German, 08820 El Prat de Llobregat (Barcelona) (ES)
(74) Representative: LKGLOBAL Partnerschaftsgesellschaft mbB

(57) **Abstract**

A method, as well as a corresponding configuration program (10), a profile preparation dataset (A), a computer-readable data carrier (11, 12, 13), a user device (5), and a server device (3) are provided, wherein for configuring the user device (5), in particular for communication via mobile telecommunication networks, the method comprises the steps of providing a secure element (6), such as an eUICC, for and/or to the user device (5) containing a template structure dataset (F) at least partly defining a profile dataset structure (G) with default attributes (B) of user profile datasets (P) for users (U) to operate the secure element (6); preparing at least one user profile dataset (P) having respective profile attributes (X); and checking with the secure element (6), whether the profile attributes (X) match the default attributes (B).

## Description

### Technical Field

The present disclosure relates to the field of configuring user devices, for example, mobile devices or Internet-of-Things (IoT) devices, for participating in communication networks. In particular, the present disclosure relates to a method of configuring a user device, in particular, for communication via mobile telecommunication networks, to a configuration program for configuring a user device, in particular for communication via mobile telecommunication networks, to user profile dataset for a secure element of a user device, such as an eUICC, for operating the secure element by a user, to a computer-readable data carrier, to a user device, in particular a mobile device or an IoT device to be configured for communication via mobile telecommunication networks, and to a server device, in particular a security server providing a secure location for handling user profiles for communication via mobile telecommunication networks.

### Background of the Invention

User devices, such as personal mobile devices or IoT-devices, configured to employ electronic user and/ or subscriber profiles for communicating on mobile networks, are known from the prior art. Such user devices are typically equipped with an electronic/ embedded secure element (SE, eSE), also known as tamper resistant element (TRE), which may take the form of an UICC, eUICC, iUICC, SIM, eSIM, iSIM, or alike, configured to store one or more electronic user or subscriber profiles that may allow the user devices to connect to one or more mobile networks. A subscriber profile (e.g., an eSIM profile) may be generated by a mobile network operator (MNO) and may be stored, e.g., downloaded to a mobile user device.

The secure elements are run by operating systems (OS) containing software and/ or firmware for operating the secure elements. Those OS need to be up to date in order to provide full and reliable functionality of the secure elements. An OS Update is especially relevant with the deployment of embedded Secure Elements (eSE) in the form of eUICC or alike. As opposite of traditional pluggable SIMs that can be inserted and removed, eSEs are soldered into user devices, making it very difficult (or costly) to replace them during the life cycle of the user devices.

The user and/ or subscriber profile is commonly based on so-called diversified data relating to an intended user and installed on a secure element of the user device to be used for communication over a corresponding mobile network by the user device. A respective user or subscriber can then activate the profile by means of respective security credentials, such as profile identifiers, authentication certificates and/ or security keys which can be stored on the secure element along with the OS. This commonly requires a so-called trusted party or entity that can be provided on SE/TREs and/ or servers, such as eSIM download servers, from which respective SE/TRE data records can be obtained or managed, such as Subscription Manager Data Preparation platforms (SM-DP+) while fulfilling respective security requirements.

Hence, the subscriber profile, i.e. a structure and format thereof, as well as the respective diversified data, including security credentials, etc., should be adapted to the respective OS. According to the prior art, there are a number of ways of installing the subscriber profile on a SE/TRE, which may include providing the diversified and/ or personalized data to the SE/TRE. In general, this can be done either via normal commands communicating with the OS or in other ways during production in factory, for example, by a so-called "Diversified Data Injection" referring to a deployment of different data for each SE/TRE in factory before issuance of the SE/TRE to a customer. For example, respective data can be provided "Over-the-air" (OTA) in that a production facility for secure elements and/ or a manufacturing facility for user devices downloads the data over a network "OTA" for installation.

WO 2023/274583 A1, for example, relates to a method, on a data generation server, for preparing generating a profile image for download from a profile server to an eUlCC hosted in a device, for the purpose of installing a profile corresponding to the profile image in the eUlCC, the method comprising the steps: a) at a data generation server, generate, for multiple devices, multiple non-personalized profile images, each non-personalized profile image comprising at least one functionality identifier specific for the respective device, and each non-personalized profile image not comprising any individual global identifier specific of an individual eUlCC, and store the generated multiple non-personalized profile images for providing to the profile server; b) at the data generation server, generate at least one profile-data image, said profile-data image comprising at least one individual global identifier of an individual eUlCC, and store the generated at least one profile-data image (RD) for providing (GD) to the profile server.

WO 2022/159355 A1 refers to an eSIM software for creating eSIMs running within a trusted, secure private network of a wireless communication services provider ("WSP"), receiving information entered by a user via a user interface to create or modify eSIM profile templates. Real-time alerts may notify that user-entered mismatched data precludes generation of eSIMs that will function in authenticating to the network. eSIMs created within the WSP secure private network may be shared outside of the secure private network using information entered via a Partner user interface accessed using credentials that grant limited access to modify an eSIM profile template. An eSIM profile may be generated and stored on a case-by-case basis instead of generating all of a large quantity, or batch, and then storing all of the batch. Transport of highly guarded security information, like master keys, outside of the secure private network does not occur.

WO 2019/120609 A1 describes a method of adaptive generation of a profile package, said profile package being constructed to, when being downloaded to an eUICC and installed in the eUICC, install a profile in the eUICC. Further described is a method of adaptive generation of a code package, said code package being constructed to, when being downloaded to a device and installed in the device, install an executable code in the device. The executable code can be an operating system. Accordingly, a batch of multiple profile (or code) descriptions is provided, instead of providing a batch of ready-made profile (or code) packages. When a target eUICC/ target device requests to the transfer server download of a profile (code) package, the target eUICC/ target device or some other competent instance provides the transfer server with configuration information of the target eUICC / target device. The transfer server retrieves, instead of a ready-made profile (code) package (eSIM), only a profile (code) description and profile (code) data. The transfer server then, via execution of the profile description together with the profile data, generates the profile package adaptively, therein flexibly considering the configuration information on the target eUICC/ target device. By this adaptive way of profile generation, profile packages matching with the real target eUICC / target device are generated. Such a matching profile package can be successfully installed in the eUICC.

Moreover, user profile datasets can be defined according to certain data templates which can be standardized by certain standardization bodies. For example, the Trusted Connectivity Alliance (TCA), provides respective specifications, such as "eUICC Profile Package: Interoperable Format Technical Specification, Version 3.3.1, July 2023. This specification defines profile package elements definitions, including file system templates and template modification rules.

EP 3 731 548 A1 is directed towards a method for distribution of instruction set modules to a requesting Universal Integrated Circuit Card. The provided technical teaching provides the advantage that instruction sets, so-called applets, can be distributed to SIM cards without a necessity to hold specific Mobile Network Operator rights and consequently, a marketplace for applets can be provided. In this context pre-established profiles are provided, which are as such static, but they contain such a variety of options of downloadable content that the user recognizes such profiles as dynamic profiles. The instruction set modules may be provided by means of a server unit and selecting at least one of the provided instruction set modules for transmittance to the requesting Universal Integrated Circuit Card, wherein merging a network subscription of the requesting Universal Integrated Circuit Card with a pre-stored profile template is performed, thereby creating a personalized profile, wherein the pre-stored profile template reflects the selected instruction set module.

Methods for configuring and secure elements of user devices, involving the provision of user profiles, including diversified and/ or personalized data, as described above, may not fully satisfy all requirements regarding their deployability and availability on the one hand, as well as functional safety and security on the other hand. In particular the provision of files that are not defined according to any standards, such as any TCA template, must be fully sent to the eUICC (FCP + FileContent). This can be inefficient if the same file is present in other profiles of the same operator.

Furthermore, the data provision can be problematic due to relatively long profile download times in low bandwidth/speed Internet scenarios which can be caused by connectivity or hardware limitations, for example. This is a major factor to be taken into account in IoT device use cases. If user profile datasets cannot be successfully downloaded, these devices may not be fully operational which can be particularly problematic if they reside at remote locations.

### Summary of the Invention

It may be seen as an object to configure user devices and/ or secure elements in a flexible manner according to current and/ or future requirements in line with current standards, yet with a certain degree of customizability until and after they are delivered to a user or manufacturer or customer. In particular, it can be regarded as an objective to provide a way of handling user profile datasets for secure elements in such a way that a future-proof range of functions, security and protection can be guaranteed without impairing the usability, availability and/ or data integrity, in particular communication capability, of the user devices or their secure elements. These objects are at least partly achieved by the subject-matter of the independent claims.

According to an aspect, a method of configuring a user device, in particular for communication via mobile telecommunication networks, the method comprising the steps of: providing a secure element, such as an eUICC, for and/or to the user device containing a template structure dataset at least partly defining a profile dataset structure with default attributes of user profile datasets for users to operate the secure element; preparing at least one user profile dataset having respective profile attributes; and checking with the secure element, whether the profile attributes match the default attributes.

According to an aspect, a configuration program for configuring a user device, in particular for communication via mobile telecommunication networks, is provided, wherein the configuration program comprises instructions which, when the configuration program is executed by a server device, a user device, and/ or a secure element, cause the server device, the user device, and/ or the secure element to carry out a corresponding method.

According to an aspect, a profile preparation dataset for a secure element of a user device, such as an eUICC, for operating the secure element by a user, is provided, the user profile dataset comprising a comprising instructions, which when profile preparation dataset is executed by a secure element, cause the secure element to carry out a corresponding method.

According to an aspect, a computer-readable data carrier having stored thereon a corresponding configuration program and/ or profile preparation dataset is provided.

According to an aspect, a user device, in particular a mobile device or an IoT device to be configured for communication via mobile telecommunication networks, is provided, wherein the user device is configured to carry out a corresponding method, comprises a corresponding configuration program, a secure element with a corresponding profile preparation dataset, and/ or a corresponding computer-readable data carrier.

According to an aspect, a server device, in particular a security server providing a secure location for handling subscriber profiles for communication via mobile telecommunication networks, is provided, wherein the server device is configured to carry out a corresponding method, comprises a corresponding configuration program, comprises a corresponding profile preparation dataset, and/ or comprises a corresponding computer-readable data carrier.

The diversified data may comprise at least one profile identifier, at least one subscription identifier, and/ or at least one security key. A data subset of the user profile dataset may be at least partly created based on security credentials. Templates can be preloaded. Loading can take place once. Template can then be used multiple times. Any template can be regarded as constituting a Profile Element (PE) by itself. A set of files referencing to a default template, such as a standardized template, for example referencing to a TCA template, may constitute a PE. Each PE of the profile can be identified by its preceding tag. For instance, PE-MF is identified by the tag "0xB0", or PE-SD uses "0xA6". New PEs can be added with future versions of respective specifications. Definitions of a Non-Standard-PEs as provided by the TCA can be used to send content processed by a specific secure element.

The proposed solution thus allows to provide a mechanism that enables to implement custom templates with respective non-standardized profile attributes, which, for example, are not defined by any standardization body, such as a TCA Interoperable Format Technical Specification. The solution can include two parts, namely, a first component of the profile preparation dataset defining how user profile datasets, for example, in the form of Bound Profile Packages (BPP) shall reference these new custom templates (i.e. one single BPP in a profile download). A second part can define how these new templates are loaded into the secure element.

Thereby, the proposed solution has the advantage over the prior art that user profile datasets can be adapted to requirements and/ or demands according to a respective subscription and/ or user device for which the user profile dataset is intended, in the sense of Adaptive Profile Management (AMP). Respective user profile datasets can be delivered to any manufacturing facility, including OEM/ODM vendor facilities, as well as fabrication facilities of the secure element, regardless of a change to standards and/ or specifications relating to the user device between the delivery and a later point of the time of deployment of user devices and/ or the secure elements to customers. User profile datasets for secure elements can be handled in such a way that a future-proof range of functions, security and protection can be guaranteed without impairing the usability, availability and/ or data integrity, in particular communication capability, of the user devices or their secure elements.

Further developments can be derived from the dependent claims and from the following description. Features described with reference to a user device, secure element, server device and components thereof may be implemented as method steps, or vice versa. Therefore, the description provided in the context of the user device, secure element, server device and their components apply in an analogous manner also to respective methods. In particular, features and functions of the user device, secure element, server device and their components may be implemented as method steps which in turn may be implemented as respective device features or functions.

According to a possible embodiment, the method further comprises the step of clearing the user profile dataset to be installed in the secure element if the profile attributes match the default attributes. In other words, the user profile dataset can be installed and the secure element immediately without the need of acquiring further data objects. This helps to minimise efforts for data handling as well as traffic and thus enables to handle user profile datasets in such a way that a future-proof range of functions, security and protection can be guaranteed without impairing the usability, availability and/ or data integrity, in particular communication capability, of the user devices or their secure elements.

According to a possible embodiment, the method further comprises the step of obtaining and/or generating further data objects to adapt the profile attributes to the default attributes if the profile attributes do not match the default attributes. Further data objects can be provided as desired and required in order to provide a user profile dataset meeting respective standards and specifications. Therefore, not the entire user profile dataset and accompanying data has to be retrieved, but certain attributes can be provided as default attributes, according to the desired profile data set structure, while other attributes, such as custom attributes, can be provided in addition to the default attributes. This further helps to minimise efforts for data handling as well as traffic and thus enables to handle user profile datasets in such a way that a future-proof range of functions, security and protection can be guaranteed without impairing the usability, availability and/ or data integrity, in particular communication capability, of the user devices or their secure elements.

According to a possible embodiment, the method further comprises the step retrieving further data objects from a server device to adapt the profile attributes to the default attributes if the profile attributes do not match the default attributes. Thereby, again, not the entire user profile dataset and accompanying data has to be retrieved, but certain attributes can be provided as default attributes, according to the desired profile data set structure, while other attributes, such as custom attributes, can be provided in addition to the default attributes. This further helps to minimise efforts for data handling as well as traffic and thus enables to handle user profile datasets in such a way that a future-proof range of functions, security and protection can be guaranteed without impairing the usability, availability and/ or data integrity, in particular communication capability, of the user devices or their secure elements.

According to a possible embodiment, the method further comprises the step retrieving the template structure dataset from a server device. Only missing templates and/ or default attributes can be retrieved from the server device in order to provide the user profile dataset in a form to be installed in the secure element. Thereby, again, not the entire user profile dataset and accompanying data has to be retrieved, but certain attributes can be provided as default attributes, according to the desired profile data set structure, while other attributes, such as custom attributes, can be provided in addition to the default attributes. This further helps to minimise efforts for data handling as well as traffic and thus enables to handle user profile datasets in such a way that a future-proof range of functions, security and protection can be guaranteed without impairing the usability, availability and/ or data integrity, in particular communication capability, of the user devices or their secure elements.

According to a possible embodiment, the method further comprises the step of selecting the template structure dataset from a list of available template structure datasets. The template structure datasets may be provided with respective template identifiers. This helps to efficiently manage the template structure datasets and thus to provide an efficient way to handle and prepare user profile datasets.

According to a possible embodiment, the method further comprises the step of checking a file description dataset for assessing whether the profile attributes match the default attributes. The file description dataset can be checked by the secure element. Thereby, the secure element can easily and quickly assess whether the profile attributes match the default attributes.

According to a possible embodiment, the method further comprises the step of merging profile attributes with default attributes. Thereby, the additional profile attributes, such as custom attributes to be provided in order to complete your profile dataset, can be minimised. Thereby, again, not the entire user profile dataset and accompanying data has to be retrieved, but certain attributes can be provided as default attributes, according to the desired profile data set structure, while other attributes, such as custom attributes, can be provided in addition to the default attributes. This further helps to minimise efforts for data handling as well as traffic and thus enables to handle user profile datasets in such a way that a future-proof range of functions, security and protection can be guaranteed without impairing the usability, availability and/ or data integrity, in particular communication capability, of the user devices or their secure elements.

According to a possible embodiment, the method further comprises the step of creating at least one elementary file of the user profile dataset. PE may be provided in the form of elementary files. These elementary files may be prepared by the secure element itself. Thereby, the amount of data to be downloaded onto the secure element for creating the user profile dataset can be kept minimal. This further facilitates that not the entire user profile dataset and accompanying data has to be retrieved, but certain attributes can be provided as default attributes, according to the desired profile data set structure, while other attributes, such as custom attributes, can be provided in addition to the default attributes. This additionally helps to minimise efforts for data handling as well as traffic and thus enables to handle user profile datasets in such a way that a future-proof range of functions, security and protection can be guaranteed without impairing the usability, availability and/ or data integrity, in particular communication capability, of the user devices or their secure elements.

According to a possible embodiment, the method further comprises the step of merging profile attributes with default attributes. The profile attributes may be merged with the default attributes by the secure element. Thereby, again, the amount of data to be downloaded onto the secure element for creating the user profile dataset can be kept minimal. This further facilitates that not the entire user profile dataset and accompanying data has to be retrieved, but certain attributes can be provided as default attributes, according to the desired profile data set structure, while other attributes, such as custom attributes, can be provided in addition to the default attributes. This additionally helps to minimise efforts for data handling as well as traffic and thus enables to handle user profile datasets in such a way that a future-proof range of functions, security and protection can be guaranteed without impairing the usability, availability and/ or data integrity, in particular communication capability, of the user devices or their secure elements.

### Brief Description of the Drawings

- Fig. 1: is a schematic illustration of a configuration system for carrying out a method according to the present invention.
- Fig. 2: is a schematic illustration of steps involved in checking profile attributes during the preparation of a user profile dataset which can be performed by the secure element.

### Detailed Description of Embodiments

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

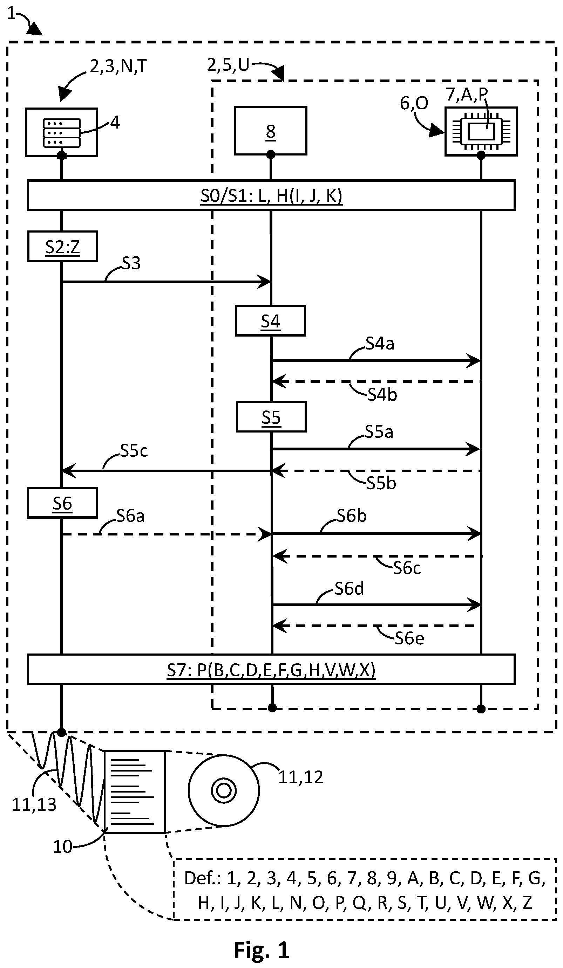

Fig. 1 shows a schematic illustration of a configuration system 1 comprising a computing device 2, for instance, in the form of a server device 3 controlled by a trusted entity T, having a hardware security module 4 adapted to store, manage and/ or provide user profile datasets P for configuring a further computing devices 2, for example, in the form of a user device 5 which may be embodied as an Internet of Things (IoT) device, such as a multimedia device, camera, speaker, household appliance, measurement device, industrial installation, vehicle, vending machine, or alike, to be associated with a machine entity, and/ or as a personal mobile device, such as a smartphone, smartwatch, etc., to be associated with a personal entity. For example, the server device 3 of the trusted entity T may be provided in the form of a Server for Subscription Manager Data Preparation + (SM-DP+).

In the present example, the user device 5 may be adapted for communication via a telecommunication network (not shown) by means of at least one user profile dataset P to be saved in a respective secure element 6 or tamper resistant element (TRE), such as an UICC, eUICC, iUICC, SIM, eSIM, iSIM, SE, eSE, or alike, provided in the form of a computer chip. The user profile data sets P are generated based on respective personal records contained as diversified data L in perspective data files on the computer device 2, in particular, the hardware security module 4 thereof, controlled by the trusted entity T. For storing and managing user profile data sets P on the secure elements 6, an operating system dataset O is installed on the secure element 6, for example, in a secure storage location 7 provided on the secure element 6. A further computing device 2, for instance, the form of this device 3, can be controlled by a network and/ or connectivity provider N which may provide the diversified data L to the trusted entity T for creating the user proper datasets P.

The operating system dataset O may comprise and/or interact with a profile preparation dataset A which may handle default attributes B and custom attributes C as profile attributes X according to respective template structure datasets F at least partly defining a profile dataset structure G The user profile datasets P comprise certain data objects D, for example, in the form of elementary files E as profile elements. The data objects may be provided based on diversified data L by a network provider N and/or trusted entity T.

The network provider N, entity T and/ or user U may communicate with the user device 5, in particular the secure element 6, for example, through a communication interface 8 of the user device 5. The communication interface 8 may be provided in the form of a logical end-to-end interface enabling secure communications between the hardware security module 4, and the secure element 6, which can be used to transfer data packages, such as eUICC Packages, BPPs, or alike. For example, the communication interface 8 may be provided as a part of a local management application, such as a Local profile assistant (LPA), or an IoT Profile Assistant (IPA), which may take the form of a Local/IoT Profile Assistant (L/IPAd) provided to the user device 5, and/ or a Local/IoT Profile Assistant provided (L/IPAe) arranged in the secure element 6.

Furthermore, the operating system dataset O and/ or the user profile P comprises security credentials H, which may include a profile identifier I, authentication certificates J and/ or security keys K. The security credentials H may comprise any kind of credentials defined by e.g., the GSMA, or alike. The security keys K may comprise any kind of cryptographic code or key element which may be adapted to interact with the user devices 5, the secure elements 6, and/ or the server device 3 of the trusted entity T as an issuer of any part of the operating system dataset O and/or any component thereof. The authentication certificates J may be any kind of electronic certificate, for example, that can be issued by the trusted entity T, for authenticating an origin of the user devices 5, the secure elements 6, the secure storage location 7, and/ or the operating system dataset O. Transmission lines (not shown) may be provided for handling and/ or transferring the operating system dataset O and/ or user profile dataset P may comprise any kind of wired and/ or wireless transmission chains, including the Internet (for transmissions "Over-The-Air") as well as other physical and/ or non-physical data carriers, which can be configured and secured as desired and required.

In any of the embodiments of the configuration system 1 as described herein, in particular the computing devices 2, can be configured to execute a computer program in the form of a configuration program 10 which may comprise and/ or define the profile preparation dataset A and any other data objects D, such as datasets and/ or subsets mentioned herein. A computer-readable data carrier 11 can have stored thereon the configuration program 10 and may take the form of a computer-readable medium 12 and/ or data carrier signal 13. When carrying out the configuration program 10, the configuration system 1 and any components thereof communicate as specified in the security program 10. Parameters associated with and/ or underlying the configuration system 1, any of the components thereof and/ or any steps S carried out thereby, can be defined in and/ or by the configuration program 10.

In a zeroth step S0, the network provider N and/or trusted entity T, and/or user U, for example by using the respective server device 3, hardware security module 4 and/or management application 8, respectively, may initiate a profile download. Therefore, in a first step S1, common mutual authentication, between the server device 3, the user device 5, and the secure element 6 may be performed (e.g., Operations like ES10b:GetEUICCChallenge, ES10b:AuthenticateServer and ESXX:AuthenticateClient are performed in this step.). Additionally, as a matter of preparation or after the success of eligibility checks in the first step S1, then in the second step S2, data objects D for user profile datasets P, such as profile metre data, may be built, along with a profile template list Z, possibly involving smdpSigned2, computing smdpSignature2 over smdpsigned 2 and euiccSignature 1, etc., for authentication.

In a step S3, if the eligibility check succeeds, the server device 3 sends the necessary data to prepare the next download (e.g., TransactionID, ProfileMetadata, smdpSigned2, smdpSignature2 and CERT.DPpb.ECDSA) as a response to the received AuthenticateClient request. Alongside the server device 3 can include the sequence of identifiers of custom templates with custom attributes C to be used, if any. In a fourth step S4, the communication interface 8 can realise that the server device 3 is intending to provide new templates, i.e., template structure datasets F, to the secure element 6.. If so, the templates may be provided from the communication interface 8 to the secure element 6 in a first fourth sub-step S4a and if needed, the communication interface 8 can obtain an updated template list Z e.g., by calling the command ES10b:GetTemplates. The secure element 6 may confirm receipt of the templates in a second fourth sub-step S4b, for example by returning template identifiers (OIDs) of installed templates to the communication interface 8.

In a fifth step S5, the communication interface 8, such as the LPA (IPA in SGP32) can check whether certain security standards for conducting user profile related operations are met, e.g., by checking whether the Profile Policy Rules (PPRs) are valid or not. Furthermore, in the fifth step S5, in particular the first fifth sub-step S5a, if the security standards for conducting user profile related operations are met, the profile download can pe prepared by sending respective data from the communication interface 8 to the secure element 6, e.g., through the interface ES 10b:PrepareDownload(smdpSigned2, smdpSIgnature, CGERT.DPpb.ECDSA). In a second fifth sub-step S5b, the secure element 6 can initiate the profile download which may involve respective authentication, for example, by [euiccSigned2, euiccSignature2]. Furthermore, in the fifths step S5, in particular in a third fifth sub-step S5c, if the user device 5 received custom template OIDs, it shall check its availability in the secure element 6 according to the information at hand, such as the template list Z and/ or respective OIDs, in order to request the user profile dataset P to be downloaded, possibly along with an indication of the missing templates (MissingTem-plateOIDs = TemplateOIDs - InstalledTemplateOiDs).

In a sixth step S6, the server device 3 may generate a further user profile dataset P, for example, in the form of a BPP, to include any potentially missing data objects D. If any template is missing, its data shall be included as well in order to be added to the secure element. The server device 3 may prepare a user profile dataset P for download, including generation of one-time key, generating session keys, generating a bound profile package and possibly missing templates. Furthermore, in the sixth step S6, in particular in a first sixth sub-step S6a, the server device 3 may inform the communication interface 8 that a user profile dataset P and/ or -related data objects D are prepared for download, for example, by [TransactionID, BPP]. Furthermore, in the sixth step S6, in particular in a second sixth sub-step S6b, if user consent was given (if required, for example, as specified by SGP22), a secure channel over which the new user profile dataset P may be downloaded can be opened e.g., executing ES10b:LoadBoundProfilePackage (ES8+:InitialiseSecureChannel). The device may ask the SM-DP+ to initiate the BoundProfilePackage download. In a third sixth sub-step S6c, the secure element 6 may confirm tot the communication interface 8 that the secure channel is opened.

Furthermore, in the sixth step S6, in particular, in a fourth sixth sub-step S6d the communication interface 8 may provide respective data objects D to the secure element 6, including possibly missing template e.g., through using interfaces ES10b:LoadBoundProfilePackage and ES8+:LoadTemplateCommand. In a fifth sixth sub-step S6e, the secure element 6 may confirm receipt of the user profile dataset, possibly along with the missing template. In an eighth step S8, secure element 6 can perform the installation of the user profile dataset P.

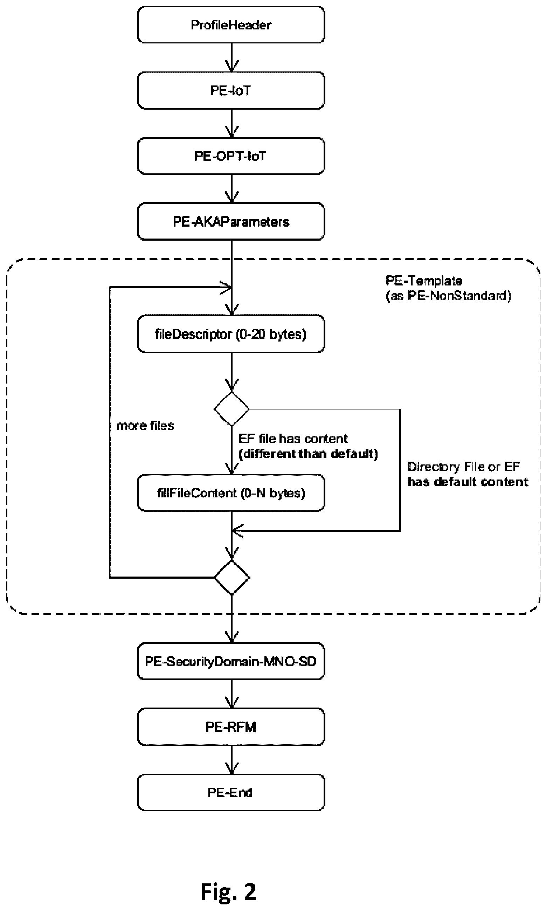

Fig. 2 shows a schematic illustration of steps S involved in checking profile attributes X during the preparation of a user profile dataset P which can be performed by the secure element 6. According to the present exemplary embodiments, if the custom templates are to be used during a profile installation which are not present in the secure element 6, these templates can be added during the download procedure as explained above with reference to Fig. 1. Any profile templates can then be checked according to the procedure as illustrated in Fig. 2, for example, by means of the profit preparation dataset A which may involve the following exemplary ASN1 structure.

```
      -- ASN1START
      PE-NonStandard ::= SEQUENCE {
        nonstandard-header PEHeader,
        issuerID OBJECT IDENTIFIER,
        content OCTET STRING
      }
       -- In which "content" shall include the new template:
      NonStandard-Template ::= SEQUENCE {
        templateID OBJECT IDENTIFIER,
        file0 File OPTIONAL, -- See ASN.1 definition in TCA specification
        file1 File OPTIONAL,
        ...
        fileN File OPTIONAL
      }
      -- ASN1STOP
```

When performing the exemplary embodiments of a method for preparing and downloading user profile datasets P as described herein, certain commands, such as standard commands, may be modified as desired or required. For example, two ES9+ command modifications can be performed, namely firstly, "AuthenticateClient" returning the following additional data:

| Output data name | Description | Type | No | MOC |
|---|---|---|---|---|
| templateOIDs | Custom templates OIDs to be used during the requested profile download. | Binary | 1 | C |

Secondly, "GetBoundProfilePackage", may be modified for receiving the following additional data:

| Output data name | Description | Type | No | MOC |
|---|---|---|---|---|
| Missing templateOIDs | Missing required custom templates OIDs in the eUICC for the requested profile download. | Binary | 1 | C |

According to the present exemplary embodiments, the following 2 two new ES10b commands can be added, namely "GetTemplates" and "LoadTemplate":

```
      "GetTemplates"
      Related Procedures: Profile Download and Installation
      Function Provider Entity: ISD-R
      Description:
      This function gets the list of all custom templates available in the eUICC by returning a
      list of OIDs.
      Command Data:
      GetTemplates ::= [XX] SEQUENCE {
      }
      Response Data:
      GetTemplatesResponse ::= [XX] SEQUENCE {
        availableTemplateOIDs SEQUENCE OF OBJECT IDENTIFIER
      }
      "LoadTemplate"
      Related Procedures: Profile Download and Installation
      Function Provider Entity: ISD-R
      Description:
      This function adds a custom TCA template to the storage in the eUICC. Upon reception
      of this command, the ISDR shall check whether the received template is already present
      in the card or not.
      Command Data:
      LoadTemplate ::= [XX] SEQUENCE {
        templateID OBJECT IDENTIFIER,
        listOfFiles [1] SEQUENCE OF OCTET STRING -- Raw template for each
      file
      }
      Response Data:
      LoadTemplateResponse::= [XX] SEQUENCE {
       resultCode INTEGER {ok(0), insufficientMemory(1),
      templateAlreadyPresent(2), undefinedError(127)}
      }
```

The present exemplary embodiments allow to reduce the size of the Bound Profile Package(s) that contain common files with other similar profiles that might also be installed in the secure element 6. The embodiments may use new customized and/ or already existing templates, such as standard templates defined by the TCA Interoperable Format Technical Specification. This is especially useful in scenarios where the secure element 6 might present connectivity limitations, either by low Internet availability in the eUICC physical location or due to low-end hardware. This may be a major factor to take into account in many IoT SGP32 devices. Moreover, present embodiments are also applicable in SGP22 devices.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### Reference Signs

- 1: configuration system
- 2: computing device
- 3: server device
- 4: hardware security module
- 5: user device
- 6: secure element
- 7: secure storage location
- 8: communication interface
- 10: configuration program
- 11: computer-readable data carrier
- 12: computer-readable medium
- 13: data carrier signal

- A: profile preparation dataset
- B: default attributes
- C: custom attributes
- D: data object
- E: elementary files
- F: template structure dataset
- G: profile dataset structure
- H: security credentials
- I: profile identifier
- J: authentication certificate
- K: security key
- L: diversified data
- N: network / connectivity provider
- O: operating system dataset
- P: user profile dataset
- S: step
- T: trusted entity
- U: user
- V: default version
- W: custom version
- X: profile attributes
- Z: profile template list

- S0: initiate profile download
- S1: mutual authentication
- S2: prepare profile meta data/template list
- S3: send profile data
- S4: initial download / data transfer
- S5: check template availability
- S6: download user profile dataset / missing templates
- S7: install profile

## Claims

1. Method of configuring a user device (5), in particular for communication via mobile telecommunication networks, the method comprising the steps of:
providing a secure element (6), such as an eUICC, for and/ or to the user device (5) containing a template structure dataset (F) at least partly defining a profile dataset structure (G) with default attributes (B) of user profile datasets (P) for users (U) to operate the secure element (6);
preparing at least one user profile dataset (P) having respective profile attributes (X); and
checking with the secure element (6), whether the profile attributes (X) match the default attributes (B).

2. Method according to claim 1, further comprising the step of clearing the user profile dataset (P) to be installed in the secure element (6) if the profile attributes (X) match the default attributes (B).

3. Method according to claim 1 or 2, further comprising the step of obtaining and/ or generating further data objects (D) to adapt the profile attributes (X) to the default attributes (B) if the profile attributes (X) do not match the default attributes (B).

4. Method according to at least one of claims 1 to 3, further retrieving further data objects (D) from a server device (4) to complete the profile attributes (X).

5. Method according to at least one of claims 1 to 4, further comprising the step of comprising the step retrieving the template structure dataset (F) from a server device (4).

6. The method according to at least one of claims 1 to 5, further comprising the step of selecting the template structure dataset (F) from a list (Z) of available template structure datasets (F).

7. Method according to claim at least one of claims 1 to 6, further comprising the step of checking a file description dataset for assessing whether the profile attributes (X) match the default attributes (B).

8. Method according to at least one of claim 5 to 7, further comprising the step of merging profile attributes (X) with default attributes (B).

9. Method according to at least one of claim 1 to 8, further comprising the step of creating at least one elementary file (E) of the user profile dataset (P).

10. Method according to at least one of claim 1 to 9, further comprising the step of merging profile attributes with default attributes (B).

11. Configuration program (10) for configuring a user device (5), in particular for communication via mobile telecommunication networks, wherein the configuration program (10) comprises instructions which, when the configuration program (10) is executed by a server device (4), a user device (5), and/ or a secure element (6), cause the server device (4), the user device (5), and/ or the secure element (6) to carry out a method according to at least one of claims 1 to 10.

12. Profile preparation dataset (A) for a secure element (6) of a user device (5), such as an eUICC, for operating the secure element (6) by a user (U), the user profile dataset (P) comprising instructions, which when profile preparation dataset (A) is executed by a secure element (6), cause the secure element (6) to carry out a method according to at least one of claims 1 to 10.

13. Computer-readable data carrier (11, 12, 13) having stored thereon a configuration program (10) according to claim 11 and/ or a profile preparation dataset (A) according to claim 12.

14. User device (3), in particular a mobile device or an IoT device to be configured for communication via mobile telecommunication networks by a user (U), wherein the user device (3) is configured to carry out a method according to at least one of claims 1 to 10, comprises a configuration program (10) according to claim 11, a secure element (6) with containing a profile preparation dataset (A) according to claim 12 and/ or a computer-readable data carrier (11, 12, 13) according to claim 13.

15. Server device (4), in particular a security server providing a secure location for handling user profiles (P) for communication via mobile telecommunication networks, wherein the server device (4) is configured to carry out a method according to at least one of claims 1 to 10, comprises a configuration program (10) according to claim 11, a profile preparation dataset (A) according to claim 12 and/ or a computer-readable data carrier (11, 12, 13) according to claim 13.
